# EUROPÄISCHE PATENTSCHRIFT

(11) **EP 1 163 464 B1**
(45) Veröffentlichungstag und Bekanntmachung des Hinweises auf die Patenterteilung: **18.08.2004**
(21) Anmeldenummer: 00909257.8
(22) Anmeldetag: 25.02.2000
(51) Int. Cl.: F16K 11/02, F16K 11/10

(54) **VORRICHTUNG ZUR STEUERUNG STRÖMENDER MEDIEN**
DEVICE FOR CONTROLLING FLOWING MEDIA
DISPOSITIF PERMETTANT DE REGULER DES MILIEUX FLUIDES

(30) Priorität: 25.03.1999 DE 19913689
(43) Veröffentlichungstag der Anmeldung: 19.12.2001
(73) Patentinhaber: Focke & Co. (GmbH & Co.), 27283 Verden (DE)
(72) Erfinder: FOCKE, Heinz, D-27283 Verden (DE); ROESLER, Burkard, D-27337 Blender (DE)
(74) Vertreter: Bolte, Erich, Dipl.-Ing.
(86) Internationale Anmeldenummer: PCT/EP2000/001600
(87) Internationale Veröffentlichungsnummer: WO 2000/058650

(56) Entgegenhaltungen:
- FR-A- 1 232 673
- US-A- 4 221 361
- US-A- 4 454 893
- US-A- 4 717 117

## Beschreibung

Die Erfindung betrifft ein Ventil mit in einem Ventilgehäuse bewegbaren elastischen Membranen als bewegbare Verschlussorgane für Ventilöffnungen, wobei die Membrane durch ein strömendes Medium betätigbar sind und jeder Membran zumindest eine am Ventilgehäuse angeschlossene Betätigungsleitung zugeordnet ist.

Ventile für strömende Medien, insbesondere Druckluft bzw. Vakuum, sind vielfach mit einem innerhalb eines Ventilgehäuses bewegbaren, starren Verschlussorgan ausgerüstet. Dieses ist üblicherweise in einer Bewegungsrichtung, zum Beispiel in Schließrichtung, durch eine Feder belastet. Dadurch sind Öffnungs- und Schließbewegungen träge, so dass kurze Taktzeiten auf Dauer nicht möglich sind.

Aus der FR-A-1 232 673 ist ein 4-Wege-Ventil bekannt, bei der Membrane als bewegbare Verschlussöffnungen für Ventilöffnungen eingesetzt werden. Die dichtende Anlage an entsprechende Ventilsitze wird durch Druckbeaufschlagung erreicht. Durch elastische Rückstellkraft werden die Ventilöffnungen geöffnet.

Aus der US-A-4,221,361 ist ebenfalls bekannt, Membrane zum Verschließen von Ventilöffnungen einzusetzen. In statischer Weise wird der Dürchfluss eines Mediums mittels einer Membran verhindert, die durch Federkraft gegen den Ventilsitz gepresst ist.

Der Erfindung liegt die Aufgabe zugrunde, ein Ventil vorzuschlagen, welches eine einfache Ausbildung und Betätigung von Verschlussorganen ermöglicht und dauerhaft leistungsfähig ist.

Zur Lösung dieser Aufgabe ist das erfindungsgemäße (Vakuum-)Ventil dadurch gekennzeichnet, dass
a) das Ventilgehäuse eine nach außen offene Entlüftungsbohrung aufweist,
b) an das Ventilgehäuse eine Versorgungsleitung anschließt, die zu einer Unterdruckquelle, insbesondere zu einer Vakuumpumpe führt, sowie eine Saugleitung, die zu einem Verbraucher, insbesondere einem Saugkopf, führt,
c) die Betätigungsleitungen derart ausgebildet und angeordnet sind, dass sie an Unterdruck- und an Druckluftquellen anschließbar sind, und die Membrane mit Unterdruck oder Druckluft beaufschlagen,
d) die Membrane jeweils durch auf der beaufschlagten Seite wirkende Druckluft und auf der anderen Seite wirkenden Unterdruck in dichtende Anlage an einen den Membranen zugeordneten Ventilsitz bringbar sind,
e) bei Öffnungsstellung der einen Membran und gleichzeitiger Schließstellung der anderen Membran die Verbindung zwischen Versorgungsleitung und Saugleitung innerhalb des Ventilgehäuses offen ist,
f) bei Öffnungsstellung der anderen Membran und gleichzeitiger Schließstellung der einen Membran die Verbindung zwischen der Versorgungsleitung und der Saugleitung gesperrt und eine Verbindung zwischen Saugleitung und Entlüftungsbohrung offen ist.

Die Membran als Verschlussorgan ist längs eines ringsherumlaufenden Randes dichtend eingespannt und durch einseitige Beaufschlagung durch ein Druckmedium, insbesondere durch Druckluft und/oder Vakuum, bis zur Anlage an einem Ventilsitz verformbar.

Das erfindungsgemäße Vakuumventil kommt vorzugsweise für die Steuerung von Luft bei Hubköpfen mit Saugorganen zum Erfassen von Gegenständen zum Einsatz. Das Vakuumventil ist besonders geeignet für die Steuerung des Vakuums an einzelnen Saugköpfen eines Saughebers, wie dieser beispielsweise in US 5 666 786 dargestellt ist.

Eine Besonderheit der Erfindung liegt in dem Konzept der Vorsteuerung des Ventils. Mit Hilfe eines Vorsteuerventils ist gewährleistet, dass beim Umschalten der (zwei) Membrane stets Unterdruck wirksam ist. Konkret werden die Membrane jeweils mit Unterdruck in eine Öffnungsstellung verformt und mittels Druckluft in die Schließstellung. Dadurch sind sehr schnelle Arbeitstakte des Ventils möglich.

Gemäß einer vorteilhaften Ausführung des Vakuumventils ist innerhalb des Gehäuses ein Strömungsrohr positioniert, dessen beiden Enden je eine Membran als Verschlussorgan zugeordnet ist. Die Membrane werden mit Druckluft der zentralen Druckluftversorgung der (Verpackungs-)Maschine versorgt. Durch die Betätigung der einen oder anderen Membran und dadurch bewirktem Verschluss des einen oder anderen Endes des Strömungsrohrs wird eine zum Hubkopf bzw, zu den Saugköpfen führende Saugleitung mit einer zur Vakuumpumpe führenden Versorgungsleitung verbunden oder die Saugleitung der Saugköpfe wird entlüftet.

Weitere Einzelheiten der Erfindung betreffen den Aufbau und die Arbeitsweise des Ventils. Ein Ausführungsbeispiel desselben wird nachfolgend anhand der Zeichnungen näher erläutert. Es zeigt:
- Fig. 1: ein (Vakuum-)Ventil im Vertikalschnitt,
- Fig. 2: das Ventil gemäß Fig. 1 bei veränderter Öffnungs- bzw. Schließstellung,
- Fig. 3: einen Vertikalschnitt durch das Ventil in einer Schnittebene III-III der Fig. 1,
- Fig. 4: einen Horizontalschnitt durch das Ventil in der Schnittebene IV-IV der Fig. 1.

Das als Ausführungsbeispiel dargestellte Ventil weist ein quaderförmiges Ventilgehäuse 10 auf. An dieses schließen an verschiedenen Seiten Versorgungs- und Betätigungsleitungen an. An der Unterseite des Ventilgehäuses 10 ist eine Versorgungsleitung 11 angebracht, die zu einer Vakuumpumpe 12 führt und demnach funktionell eine Saugleitung ist. An einer querliegenden, aufrechten Seitenfläche schließt eine Verbraucherleitung an, nämlich eine Saugleitung 13, die bei dem bevorzugten Anwendungsbeispiel zu einem Saugkopf eines Saughebers (nicht gezeigt) eines Verpackungsroboters führt. An einander gegenüberliegenden (aufrechten) Seitenflächen sind Betätigungsleitungen 14, 15 für Ventil- bzw. Verschlussorgane angebracht. Es handelt sich dabei um Druckluftleitungen. Im Bereich einer Oberseite ist eine Ausgleichsleitung 16 mit dem Ventilgehäuse 10 verbunden.

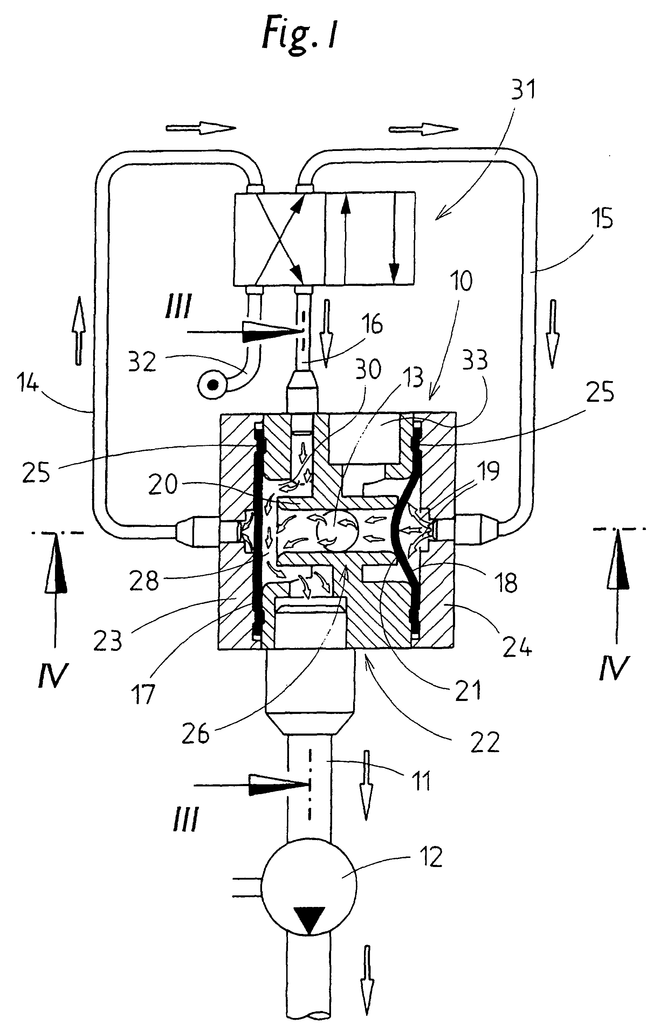

Innerhalb des Ventilgehäuses 10 sind Durchtrittsöffnungen bzw. Strömungskanäle gebildet, die durch Verschlussorgane absperrbar sind. Diese Verschlussorgane sind im vorliegenden Falle als Membran 17, 18 aus elastisch verformbarem bzw. dehnbarem Werkstoff ausgebildet, zum Beispiel aus Gummi oder Kunststoff. Die scheibenförmigen Membrane 17, 18 sind längs eines Außenrandes dicht bzw. fest verankert. Ein innerer, mittiger Bereich liegt frei. Zum Betätigen einer Membran 17, 18 als Verschlussorgan wird die Membran 17, 18 an der einen (äußeren) Seite mit einem strömenden Druckmedium, nämlich durch Druckluft beaufschlagt (Pfeile 19). Dadurch ergibt sich eine ballige Verformung der betreffende Membran 18 bis zur Anlage an einem Ventilsitz 20 oder 21. Der kreisringförmige, mit abgerundeter Fläche ausgebildete Ventilsitz 20, 21 wird ringsherum durch die Membran 17, 18 abgedichtet. Die Druckluft zur Betätigung der Membran 17, 18 wird durch die Betätigungsleitung 14, 15 zugeführt, bei der Stellung gemäß Fig. 1 durch die Betätigungsleitung 15 zur Membran 18.

Das Ventilgehäuse 10 besteht aus einem Kernstück 22 und zwei seitlichen Abdeckplatten 23, 24. Letztere dienen zum einen zur Fixierung der Membrane 17, 18 am Kernstück 22. Zur sicheren Verankerung bilden dabei die Abdeckplatten 23, 24 einerseits und das Kernstück 22 andererseits eine Nut-Feder-Verbindung 25 für die Membrane.

Im Bereich der Abdeckplatten 23, 24 schließen (mittig) die Betätigungsleitungen 14, 15 an das Ventilgehäuse 10 an und bilden so die Druckseite für die Betätigung der Membrane 17, 18.

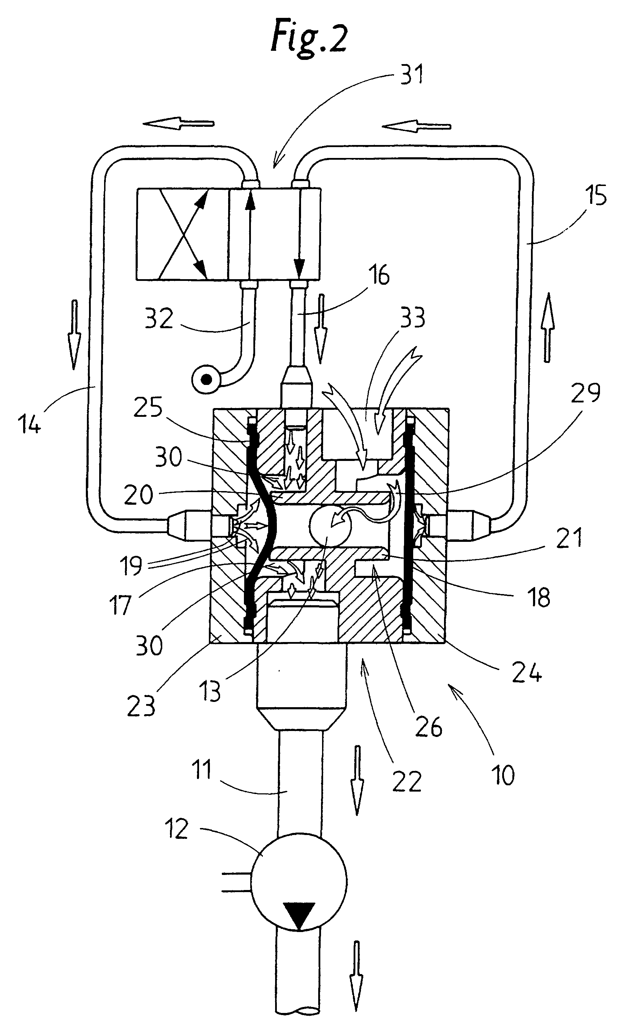

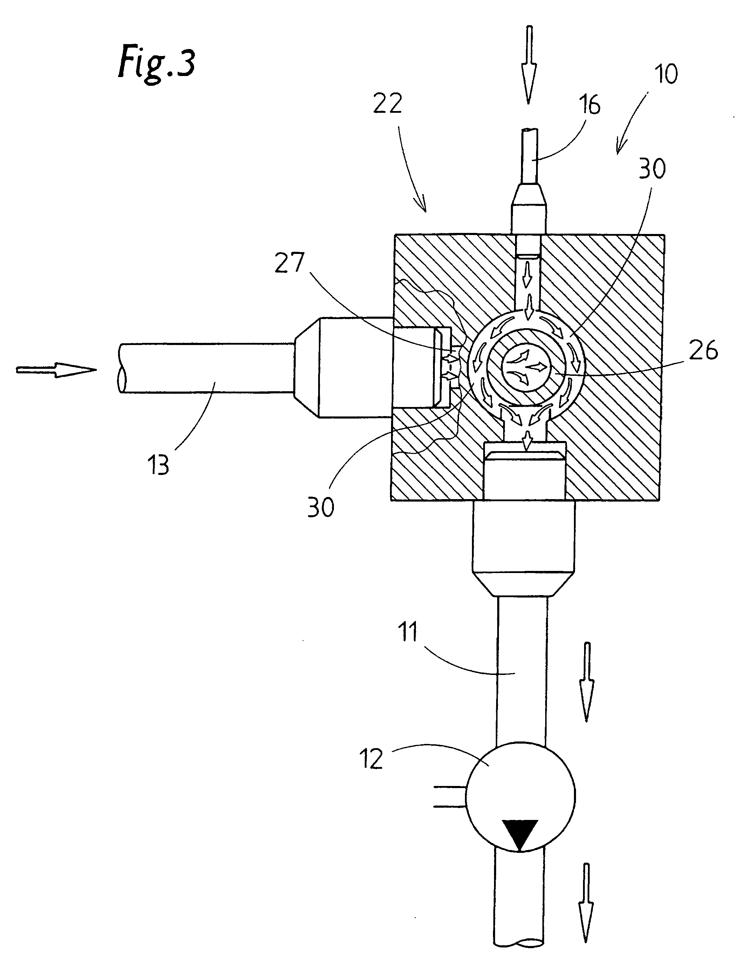

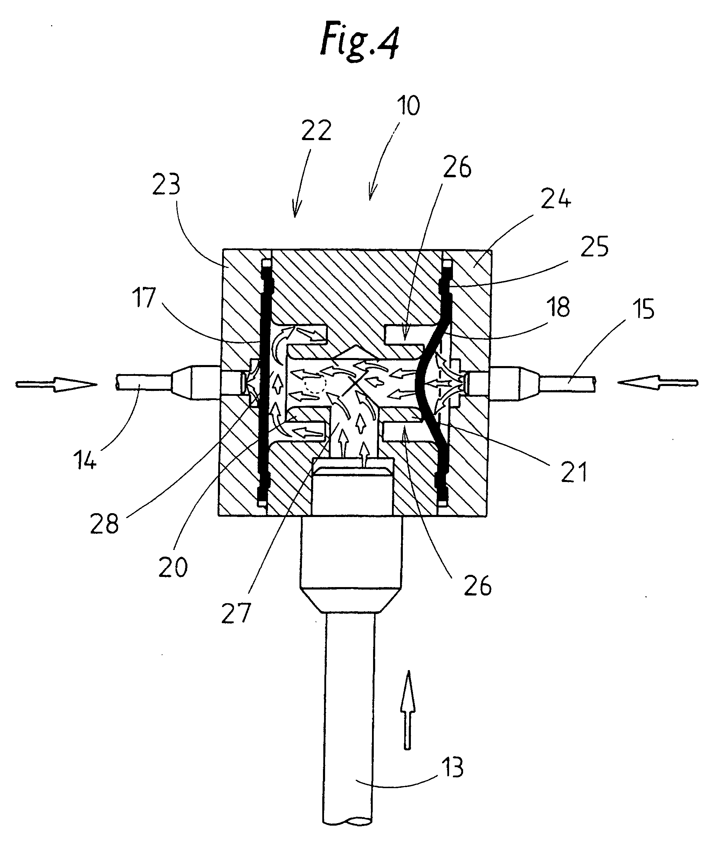

Das Kernstück 22 weist mehrere Strömungskanäle und Leitungsanschlüsse auf. Die Versorgungsleitung 11, die Saugleitung 13 und die Ausgleichsleitung 16 schließen unmittelbar an das Kernstück 22 an. Innerhalb desselben ist, mittig und quergerichtet, ein Strömungsrohr 26 gebildet. Dieses quer zur Versorgungsleitung 11 positionierte Strömungsrohr 26 bildet an den Enden die Ventilsitze 20, 21 benachbart zu den Membranen 17, 18. Die Verbraucherleitung, nämlich Saugleitung 13, schließt über ein Kanalstück 27 in der Längsmitte an das Strömungsrohr 26 an (Fig. 4). Die Enden des Strömungsrohrs 26, also die Ventilsitze 20, 21, liegen bei entspannter Membran 17, 18 mit Abstand von dieser, so dass in Öffnungsstellung des jeweiligen Verschlussorgans zwischen Membran 17, 18 und Strömungsrohr 26 ein offener Strömungsweg 28 (Fig. 1) bzw. 29 (Fig. 2) gebildet ist. Durch die Gestalt und Anordnung des Strömungsrohrs 26 innerhalb des Gehäuses wird weiterhin ein Ringkanal 30 an der Außenseite des Strömungsrohrs 26 gebildet, der auch bei geschlossener Membran 17 frei ist und die Ausgleichsleitung 16 mit der Versorgungsleitung 11 verbindet (Fig. 2, Fig. 3).

Die Betätigung der Membrane 17, 18 ist durch ein Vorsteuerventil 31 steuerbar. Es handelt sich dabei um ein 4/2-Wegeventil. Die Betätigungsleitungen 14, 15 sind an das Vorsteuerventil 31 angeschlossen. Des weiteren führt eine zentrale Druckluftleitung 32 von einer Druckluftquelle, insbesondere einer zentralen, maschinenseitigen Druckluftversorgung, zum Vorsteuerventil 31. Schließlich ist auch die Ausgleichsleitung 16 mit dem Vorsteuerventil 31 verbunden.

In der Stellung gemäß Fig. 1 ist die Betätigungsleitung 15 für die Membran 18 über das Vorsteuerventil 31 mit der Druckluftleitung 32 verbunden. Die Membran 18 wird mittels Druckluft (Pfeile 19) in die Schließstellung verformt.

Bei dieser Stellung des Vorsteuerventils 31 ist die Betätigungsleitung 14 mit der Ausgleichsleitung 16 verbunden. Über den Strömungsweg 28 wird eine Verbindung zur Versorgungsleitung 11 und damit zur Vakuumpumpe 12 hergestellt. Über die Betätigungsleitung 14 wird so auf die Außenseite der Membran 17 Vakuum bzw. Unterdruck übertragen, mit der Folge, dass der Schaltvorgang, nämlich die Rückkehr der Membran 17 aus einer Schließstellung (Fig. 2) in die Öffnungsstellung (Fig. 1) durch Unterdruck an der freien Seite unterstützt wird.

Weiterhin ist in der Position gemäß Fig. 1 die Verbraucherleitung, also die Saugleitung 13, über das Strömungsrohr 26 und den Strömungsweg 28 mit der Unterdruckquelle verbunden, nämlich über die Versorgungsleitung 11. In dieser Stellung werden also die Saugköpfe mit Unterdruck beaufschlagt.

Durch Verstellung des Vorsteuerventils 31 in die Position gemäß Fig. 2 ist die Betätigungsleitung 14 mit der Druckluftquelle bzw. mit der Druckluftleitung 32 verbunden. Die Membran 17 wird gegen den benachbarten Ventilsitz 20 gedrückt, während gleichzeitig die Membran 18 in die Öffnungsstellung unter Anlage an der Abdeckplatte 24 zurückkehrt. Dieser Öffnungsvorgang wird dadurch unterstützt, dass die Betätigungsleitung 15 über die Ausgleichsleitung 16 und den Ringkanal 30 mit der Vakuumpumpe 12 verbunden ist, also an der Rückseite der Membran 18 Unterdruck erzeugt wird.

Durch die Öffnungsstellung der Membran 18 wird eine - an der Oberseite des Kernstücks 22 angeordnete - Entlüftungsbohrung 33 freigegeben. Diese ist nun über den Strömungsweg 29 und das Strömungsrohr 26 mit der Verbraucherleitung, also der Saugleitung 13 verbunden. Diese wird demnach entlüftet, die angeschlossenen Saugköpfe geben den erfassten Gegenstand frei.

Durch die Gestaltung des Ventils bzw. die Anordnung der elastisch verformbaren Verschlussorgane - Membrane 17, 18 - ist gewährleistet, dass diese in Schließstellung auf der Schließseite, also auf der dem Ventilsitz 20, 21 zugekehrten Seite, stets mit Unterdruck belastet sind, so dass keine Druckkräfte der Schließkraft durch Druckluft aus den Betätigungsleitungen 14, 15 entgegenwirken.

### Bezugszeichenliste

- 10: Ventilgehäuse
- 11: Versorgungsleitung
- 12: Vakuumpumpe
- 13: Saugleitung
- 14: Betätigungsleitung
- 15: Betätigungsleitung
- 16: Ausgleichsleitung
- 17: Membran
- 18: Membran
- 19: Pfeil
- 20: Ventilsitz
- 21: Ventilsitz
- 22: Kernstück
- 23: Abdeckplatte
- 24: Abdeckplatte
- 25: Nut-Feder-Verbindung
- 26: Strömungsrohr
- 27: Kanalstück
- 28: Strömungsweg
- 29: Strömungsweg
- 30: Ringkanal
- 31: Vorsteuerventil
- 32: Druckluftleitung
- 33: Entlüftungsbohrung

## Patentansprüche

1. Ventil mit in einem Ventilgehäuse (10) bewegbaren elastischen Membranen (17, 18) als bewegbare Verschlussorgane für Ventilöffnungen, wobei die Membrane (17, 18) durch ein strömendes Medium betätigbar sind und jeder Membran (17, 18) zumindest eine am Ventilgehäuse angeschlossene Betätigungsleitung (14, 15) zugeordnet ist, **dadurch gekennzeichnet, dass**
a) das Ventilgehäuse eine nach außen offene Entlüftungsbohrung (33) aufweist,
b) an das Ventilgehäuse (10) eine Versorgungsleitung (11) anschließt, die zu einer Unterdruckquelle, insbesondere zu einer Vakuumpumpe führt, sowie eine Saugleitung (13), die zu einem Verbraucher, insbesondere einem Saugkopf, führt,
c) die Betätigungsleitungen (14, 15) derart ausgebildet und angeordnet sind, dass sie an Unterdruck- und an Druckluftquellen anschließbar sind, und die Membrane (17, 18) mit Unterdruck oder Druckluft beaufschlagen,
d) die Membrane (17, 18) jeweils durch auf der beaufschlagten Seite wirkende Druckluft und auf der anderen Seite wirkenden Unterdruck in dichtende Anlage an einen den Membranen (17, 18) zugeordneten Ventilsitz (20, 21) bringbar sind,
e) bei Öffnungsstellung der einen Membran (17) und gleichzeitiger Schließstellung der anderen Membran (18) die Verbindung zwischen Versorgungsleitung (11) und Saugleitung (13) innerhalb des Ventilgehäuses (10) offen ist,
f) bei Öffnungsstellung der anderen Membran (18) und gleichzeitiger Schließstellung der einen Membran (17) die Verbindung zwischen der Versorgungsleitung (11) und der Saugleitung (13) gesperrt und eine Verbindung zwischen Saugleitung (13) und Entlüftungsbohrung (33) offen ist.

2. Ventil nach Anspruch 1, **dadurch gekennzeichnet, dass** bei unterbrochener Verbindung zwischen der Versorgungsleitung (11) und der Saugleitung (13) durch Anlage der Membran (17) am Ventilsitz (20) die Betätigungsleitung (15) für die andere Membran (18) innerhalb des Ventilgehäuses (10) mit der Versorgungsleitung (11) verbunden ist, derart, dass über die Betätigungsleitung (15) Unterdruck auf eine vom Ventilsitz (21) abgekehrte Seite der Membran (18) übertragbar ist.

3. Ventil nach Anspruch 1, **dadurch gekennzeichnet, dass** innerhalb des Ventilgehäuses (10) ein Strömungsrohr (26) gebildet ist, an dessen zwei Enden jeweils ein ringförmiger Ventilsitz (20, 21) gebildet ist und denen je eine Membran (17, 18) mittig gegenüberliegt, wobei sich die Membran (17, 18) in Öffnungsstellung in einer Strecklage mit Abstand vom Ventilsitz (20, 21) befindet und in Schließstellung durch Beaufschlagung mit Druckluft unter elastischer Verformung an dem jeweiligen Ventilsitz (20, 21) anliegt.

4. Ventil nach Anspruch 3, **gekennzeichnet durch** folgende Merkmale:
a) die Saugleitung (13) ist queraxial an das Strömungsrohr (26) angeschlossen bzw. mündet in dieses,
b) das Strömungsrohr (26) ist bei offenem Ventilsitz (20), also bei zurückgezogener Membran (17), über einen Strömungsweg (28) mit der Versorgungsleitung (11) verbunden.

5. Ventil nach Anspruch 1, **gekennzeichnet durch** folgende Merkmale.
a) die Betätigungsleitungen (14, 15) sind mit einem gemeinsamen Vorsteuerventil (31) verbunden,
b) jede der Betätigungsleitungen (14, 15) ist je nach Stellung des Vorsteuerventils (31) alternativ mit einer Druckleitung (32) oder mit einer Ausgleichsleitung (16) verbunden,
c) die Ausgleichsleitung (16) ist an das Ventilgehäuse (10) angeschlossen und mit der Versorgungsleitung (11) bzw. mit der Vakuumpumpe (12) verbunden zur Übertragung von Unterdruck auf die vom Ventilsitz (20, 21) abliegende Seite der Membran (17) oder der Membran (18).

6. Ventil nach Anspruch 1, **gekennzeichnet durch** folgende Merkmale:
a) das Ventilgehäuse (10) besteht aus einem Kernstück (22) einerseits und an einander gegenüberliegenden Seiten des Kernstücks (22) angebrachten Abdeckplatten (23, 24) andererseits,
b) die Membrane (17, 18) sind zwischen dem Kernstück (22) einerseits und der zugeordneten Abdeckplatte (23, 24) andererseits eingespannt,
c) die Betätigungsleitungen (14, 15) schließen jeweils an die eine oder andere Abdeckplatte (23, 24) an.

7. Ventil nach Anspruch 6, **dadurch gekennzeichnet, dass** das Strömungsrohr (26) mittig innerhalb des Kernstücks (22) angeordnet und queraxial zur Versorgungsleitung (11) sowie zur gegenüberliegenden Ausgleichsleitung (16) gerichtet ist.

## Claims

1. Valve having elastic diaphragms (17, 18), movable within a valve housing (10), as movable closure elements for valve apertures, the diaphragms (17, 18) being actuable by a flowing medium and each diaphragm (17, 18) being assigned at least one actuating line (14, 15) connected to the valve housing, **characterized in that**
a) the valve housing has an outwardly open ventilation bore (33),
b) the valve housing (10) has connected to it a supply line (11), which leads to a subatmospheric pressure source, in particular to a vacuum pump, and a suction line (13), which leads to a consumer, in particular a suction head,
c) the actuating lines (14, 15) are designed and arranged in such a manner that they can be connected to subatmospheric pressure sources and to compressed air sources, and apply subatmospheric pressure or compressed air to the diaphragms (17, 18),
d) the diaphragms (17, 18) can be brought to bear in a sealing manner against a valve seating (20, 21) assigned to the diaphragms (17, 18) by means of compressed air taking effect on the side which is acted on and subatmospheric pressure taking effect on the other side,
e) when one diaphragm (17) is in the open position and at the same time the other diaphragm (18) is in the closed position, the connection between supply line (11) and suction line (13) within the valve housing (10) is open,
f) when the other diaphragm (18) is in the open position and at the same time the first diaphragm (17) is in the closed position, the connection between the supply line (11) and the suction line (13) is blocked and a connection between suction line (13) and ventilation bore (33) is open.

2. Valve according to Claim 1, **characterized in that** when the connection between the supply line (11) and the suction line (13) is interrupted, as a result of the diaphragm (17) bearing against the valve seating (20), the actuating line (15) for the other diaphragm (18) is connected to the supply line (11) within the valve housing (10), in such a manner that subatmospheric pressure can be transmitted via the actuating line (15) to a side of the diaphragm (18) which is remote from the valve seating (21).

3. Valve according to Claim 1, **characterized in that** inside the valve housing (10) there is formed a flow pipe (26), at the two ends of which there is in each case an annular valve seating (20, 21), in each case with a diaphragm (17, 18) located centrally opposite them, the diaphragm (17, 18), in the open position, being located in a stretched position at a distance from the valve seating (20, 21), and in the closed position bearing against the respective valve seating (20, 21), with elastic deformation, as a result of the application of compressed air.

4. Valve according to Claim 3, **characterized by** the following features:
a) the suction line (13) is connected to or opens out into the flow pipe (26) cross-axially,
b) the flow pipe (26), when the valve seating (20) is open, i.e. with the diaphragm (17) retracted, is connected to the supply line (11) via a flow passage (28).

5. Valve according to Claim 1, **characterized by** the following features:
a) the actuating lines (14, 15) are connected to a common pilot valve (31),
b) depending on the position of the pilot valve (31), each of the actuating lines (14, 15) is alternatively connected to a pressure line (32) or to a compensation line (16),
c) the compensation line (16) is connected to the valve housing (10) and is also connected to the supply line (11) or to the vacuum pump (12) in order to transmit subatmospheric pressure to that side of the diaphragm (17) or of the diaphragm (18) which is remote from the valve seating (20, 21).

6. Valve according to Claim 1, **characterized by** the following features:
a) the valve housing (10) comprises a core piece (22) on the one hand and cover plates (23, 24) arranged on mutually opposite sides of the core piece (22), on the other hand,
b) the diaphragms (17, 18) are clamped between the core piece (22), on the one hand, and the associated cover plate (23, 24), on the other hand,
c) the actuating lines (14, 15) are each connected to one or other of the cover plates (23, 24).

7. Valve according to Claim 6, **characterized in that** the flow pipe (26) is arranged centrally inside the core piece (22) and is oriented cross-axially with respect to the supply line (11) and with respect to the opposite compensation line (16).

## Revendications

1. Vanne comportant des membranes élastiques (17, 18) mobiles dans le corps (10) de la vanne qui constituent des organes mobiles d'obturation d'orifices de la vanne, ces membranes (17, 18) étant actionnées par un fluide en écoulement et à chaque membrane (17, 18) étant associée au moins une conduite de commande (14, 15) raccordée au corps de la vanne, **caractérisée par le fait que**
a) le corps de la vanne présente un trou évent (33) qui débouche à l'extérieur,
b) au corps (10) de la vanne sont raccordées une conduite d'alimentation (11) qui va à une source de dépression, en particulier à une pompe à vide, et une conduite d'aspiration (13) qui va à un récepteur, en particulier à une tête aspirante,
c) les conduites de commande (14, 15) sont faites et placées de façon à pouvoir être raccordées à des sources de dépression et à des sources d'air comprimé et soumettre les membranes (17, 18) à une dépression ou à l'action d'air comprimé,
d) chacune des membranes (17, 18) peut, au moyen d'air comprimé agissant sur sa face chargée et d'une dépression agissant sur son autre face, être appliquée de manière étanche sur un siège (20, 21) de la vanne associé à elle,
e) lorsqu'une membrane (17) est en position d'ouverture et l'autre (18) est en même temps en position de fermeture, la conduite d'alimentation (11) communique à l'intérieur du corps (10) de la vanne avec la conduite d'aspiration (13).
f) lorsque l'autre membrane (18) est en position d'ouverture et la première (17) est en même temps en position de fermeture, la communication entre la conduite d'alimentation (11) et la conduite d'aspiration (13) est coupée et une communication est établie entre la conduite d'aspiration (13) et le trou évent (33).

2. Vanne selon la revendication 1, **caractérisée par le fait que** lorsque la communication entre la conduite d'alimentation (11) et la conduite d'aspiration (13) est coupée par application de la membrane (17) sur son siège (20), la conduite de commande (15) commandant l'autre membrane (18) communique à l'intérieur du corps (10) de la vanne avec la conduite d'alimentation (11), de façon telle qu'une dépression puisse être transmise par la conduite de commande (15) à une face de la membrane (18) opposée au siège (21).

3. Vanne selon la revendication 1, **caractérisée par le fait qu'**à l'intérieur du corps (10) de la vanne est formé un tuyau d'écoulement (26) à chacune des extrémités duquel est formé un siège annulaire (20, 21) et en face de chacune des extrémités duquel est placée, centrée sur celle-ci, une membrane (17, 18), la membrane (17, 18), en position d'ouverture, se trouvant dans une position étendue à distance de son siège (20, 21), et, en position de fermeture, s'appuyant sur son siège (20, 21) par déformation élastique par action d'air comprimé.

4. Vanne selon la revendication 3, **caractérisée par** les caractéristiques suivantes :
a) la conduite d'aspiration (13) se raccorde au tuyau d'écoulement (26), ou débouche dans celui-ci, perpendiculairement à l'axe de celui-ci,
b) lorsque le siège (20) est dégagé, c'est-à-dire la membrane (17) reculée de celui-ci, le tuyau d'écoulement (26) communique avec la conduite d'alimentation (11) par une voie d'écoulement (28),

5. Vanne selon la revendication 1, **caractérisée par** les caractéristiques suivantes :
a) les conduites de commande (14, 15) sont raccordées à un distributeur pilote commun (31),
b) chacune des conduites de commande (14, 15) communique, suivant la position du distributeur pilote (31), avec une conduite de refoulement (32) ou avec une conduite d'égalisation (16),
c) la conduite d'égalisation (16) est raccordée au corps (10) de la vanne et communique avec la conduite d'alimentation (11), ou avec la pompe à vide (12), pour la transmission de dépression au côté de la membrane (17) ou de la membrane (18) opposé au siège (20, 2 1).

6. Vanne selon la revendication 1, **caractérisée par** les caractéristiques suivantes :
a) son corps (10) est constitué d'une part d'un coeur (22) et d'autre part de plaque de couverture (23, 24) montées sur des côtés opposés de ce coeur (22),
b) les membranes (17, 18) sont montées entre le coeur (22) et la plaque de couverture associée (23, 24),
c) les conduites de commande (14, 15) se raccordent chacune à une des plaques de couverture (23, 24).

7. Vanne selon la revendication 6, **caractérisée par le fait que** le tuyau d'écoulement (26) est placé au milieu à l'intérieur du coeur (22) et orienté perpendiculairement à l'axe de la conduite d'alimentation (11) et à l'axe de la conduite d'égalisation (16) opposée.
